(19) **Europäisches Patentamt**

**European Patent Office**

**Office européen des brevets**

(11) **EP 1 187 048 A2**

(12) **EUROPEAN PATENT APPLICATION**

(43) Date of publication:
**13.03.2002 Bulletin 2002/11**

(51) Int Cl.7: **G06F 17/60**

(21) Application number: **01120455.9**

(22) Date of filing: **28.08.2001**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI** | (71) Applicant: **MATSUSHITA ELECTRIC INDUSTRIAL CO., LTD.**<br>**Kadoma-shi, Osaka 571-8501 (JP)** |
| (30) Priority: **29.08.2000 JP 2000258651** | (72) Inventor: **Senoh, Takanori**<br>**Hirakata-shi, Osaka 573-0093 (JP)** |
| | (74) Representative: **Eisenführ, Speiser & Partner**<br>**Martinistrasse 24**<br>**28195 Bremen (DE)** |

(54) **Network content distribution control**

(57)  Content distribution control over a network in an electronic distribution system protects the content copyright while distributing content in a format enabling viewing and enjoyment at the user terminal. The method for controlling content distribution over a network comprises generating content in a first format specification by adding content identification data for identifying specific content to data produced in a first format specification for viewing; sending the content to a network; receiving the content via the network; separating the received content into the content identification data and the data in the first format specification; converting the separated data in the first format specification to data in a different, second format specification; generating content in a second format specification by adding the separated content identification data to the data converted to the second format specification; and then sending the content in the second format specification to a user terminal.

## Fig.1

**Description**

BACKGROUND OF THE INVENTION

FIELD OF THE INVENTION

This invention relates to controlling an electronic distribution system for distributing digital multimedia content, including audio and video, by way of a network.

DESCRIPTION OF RELATED ART

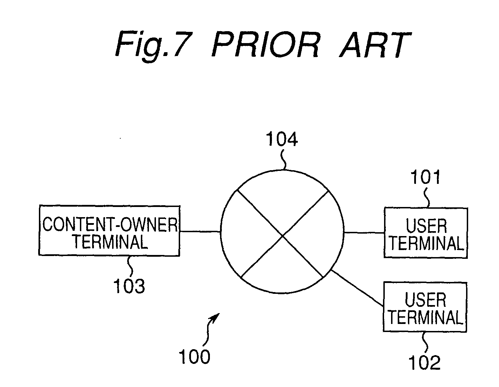

Fig. 7 shows a prior art electronic distribution system 100, which as shown in the figure has plural user terminals 101 and 102 and a content-owner terminal 103. The plural user terminals 101 and 102 and content-owner terminal 103 are connected to a common network 104, such as the Internet, whereby they can communicate with each other.

When content is conventionally distributed using this electronic distribution system 100, the content owner loads a catalog of the available content onto a web site and solicits users wanting the content. When a user provides credit card information to pay for desired content, the electronic distribution system 100 verifies the credit card information to authenticate the user, and then delivers the requested content to the user.

More specifically, the content owner publishes a directory of the content that is available for distribution and makes the directory accessible via the network 104. The published directory is a catalog containing at least titles, content summaries and price information that is uploaded to a web site on the content-owner terminal 103. When a user of a user terminal 101 wants to obtain particular content, the user connects to the network 104 using the user terminal 101 and accesses the web site where the desired content is located either by using a search engine site to find the web site address or inputting the web site address found from a magazine, for example. If the summary and price of the desired content found in the catalog on the web site are acceptable to the user, the user sends his credit card number and other information to the content-owner terminal 103. If the content owner successfully verifies the credit card information, the content-owner terminal 103 sends the content to the user terminal 101.

The technology described above is described in United States Patent 6,055,513, "Method and Apparatus for Intelligent Selection of Goods and Services in Telephonic and Electronic Commerce."

A problem arises with this prior art electronic distribution system 100 when the specifications of the distributed content differ from the specifications of content that is viewable on the user's terminal or monitor, resulting in the user being unable to enjoy the content. This problem occurs, for example, when the content-owner terminal 103 distributes content in the high definition TV (HDTV) format but the terminal on the user terminal 101, 102 side can only display content in the standard definition TV (SDTV) format.

Another problem with this prior art electronic distribution system 100 is that it is not possible to prevent illegal copying of content. More specifically, it is not possible to prevent the user of a user terminal 101 from loading purchased content to the user's own web site without the permission of the content owner so that a third party (such as the user of user terminal 102) can copy the content from the first user's web site either for a fee or for free. This act subjects the producer and legal owner of the content to significant loss of income and is piratical.

SUMMARY OF THE INVENTION

An object of this invention is therefore to provide an electronic distribution system that can protect the copyright of the content and also provide content in a format that can be viewed on the user terminal.

To achieve these objects, a method according to the present invention for controlling content distribution over a network has steps of generating content in a first format specification by adding content identification data identifying specific content to data produced in a first format specification for viewing; sending the content to a communication network; receiving the content via the communication network; separating the received content into the content identification data and the data in the first format specification; converting the separated data in the first format specification to data in a second format specification that is different from the first format specification; generating content in a second format specification by adding the separated content identification data to the data converted to the second format specification; and sending the content in the second format specification to a user terminal.

The objects of the invention can also be achieved by writing the content distribution control method of the invention as a computer-executable content distribution control program.

These objects can yet further be achieved with a recording medium storing this content distribution control program.

Yet further, the objects of the invention can be achieved with a system according to the present invention for controlling content distribution over a network, the system having a first identification data adding unit for generating content in a first format specification by adding content identification data for identifying specific content to data produced in a first format specification for viewing, and then sending the content to a communication network; an identification data separating unit for receiving the content from the first identification data adding unit via the communication network, and separating the received content into the content identification data and the data in the first format specification; a converter for converting data in the first format specification separated by the identification data separating unit to data in a second format specification that is different from the first format specification; and a second identification data adding unit for generating content in a second format specification by adding the content identification data separated by the identification data separating unit to the data to the data converted to the second format specification by the converter, and then sending the content in the second format specification to a user terminal.

By converting content from a first format specification to a second format specification and sending the reformatted content to a viewer (user) terminal, the content distribution system of the present invention enables a user to enjoy content in the format of a display device that is different from the specifications of the user terminal.

In addition, by adding the identification data inserted to content in the first format specification to the content converted to the second format specification, the rights of the content owner can be protected even after the format of the content has been changed.

Yet further, content ID appropriate to content in the second format specification can be achieved by converting the content ID extracted from content in the first format specification according to the conversion to the second format and then adding the converted content ID to the content in the second format.

A drop in the quality of content in the second format can also be prevented by converting content from the first to the second format after removing the content ID from the content in the first format.

Other objects and attainments together with a fuller understanding of the invention will become apparent and appreciated by referring to the following description and claims taken in conjunction with the accompanying drawings.

BRIEF DESCRIPTION OF THE DRAWINGS

These and other object and features of the present invention will become clear from the following description taken in conjunction with the preferred embodiments thereof with reference to the accompanying drawings, in which:

Fig. 1 is a diagram showing the configuration of a content distribution system according to a preferred embodiment of the present invention;
Fig. 2 is a block diagram showing a specific configuration of this content distribution system;
Fig. 3 is an example of content identification data;
Fig. 4 is an example of a catalog containing plural catalog data entries;
Fig. 5 is an example of an identification data table;
Fig. 6 is the concept of the format conversion process; and
Fig. 7 is a prior art electronic distribution system.

DETAILED DESCRIPTION OF THE PREFERRED EMBODIMENTS

The preferred embodiments of the present invention are described below with reference to the accompanying figures wherein parts having the same reference numeral also have the same function.

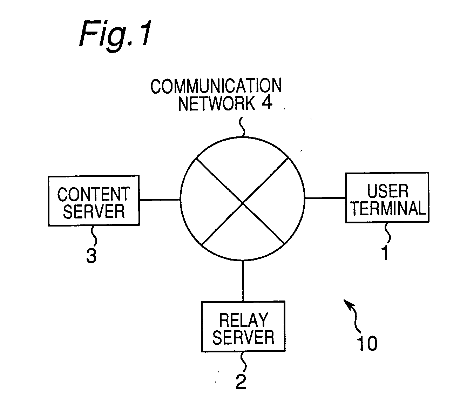

Fig. 1 shows the configuration of a content distribution system 10 according this preferred embodiment of the invention. Content distribution system 10 has a user terminal 1, relay server 2, and content server 3. The user terminal 1, relay server 2, and content server 3 are each connected to a communication network 4, such as the Internet, through which they can communicate with each other. With content distribution system 10, the content server 3 provides the content available for distribution (selling) on the relay server 2. Users can view the content published on the relay server 2 and purchase the desired content. User purchase requests are sent to the content server 3. The content server 3 then sends the requested content to the relay server 2 in a first format specification. The relay server 2 converts the content received from the content server 3 in the first format to a second format specification, and sends the reformatted content to the user terminal 1. It will be obvious to one with ordinary skill in the related art that while only one user terminal 1 is shown in the figure, plural user terminals can be connected.

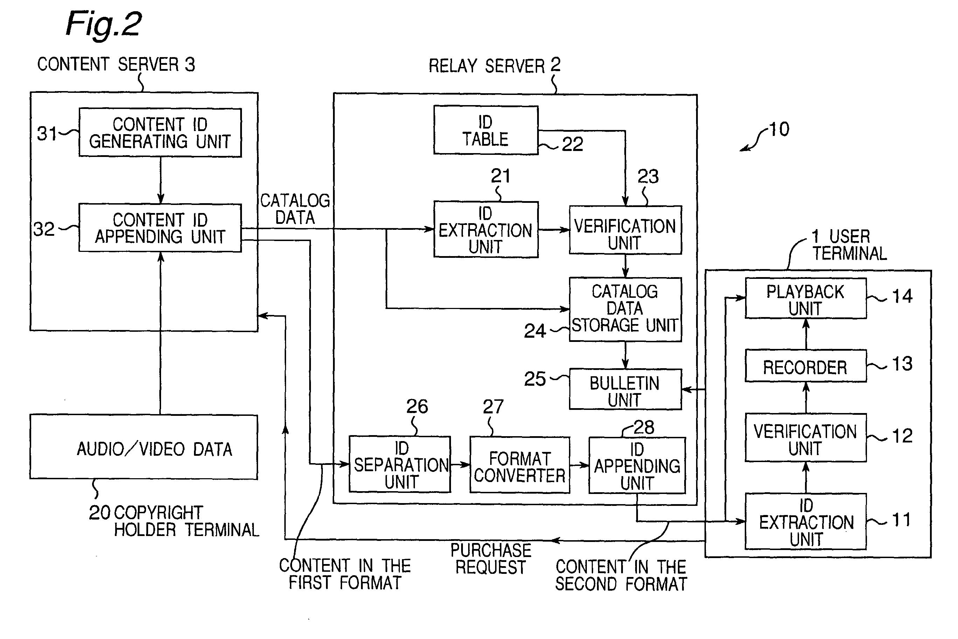

The configuration of this content distribution system 10 is described in greater detail with reference to Fig. 2. Fig. 2 is a block diagram showing a specific configuration of the content distribution system 10. Note that for convenience the communication network 4 is not shown. This configuration is described next in conjunction with data flow.

The content producer first produces audio and/or video (AV) data (multimedia data) according to a particular digital specification. This multimedia data is what the user views and listens to, and is commonly and herein referred to as "content." It will also be noted that multimedia data to which content identification data (hereinafter referred to as " content ID" and further described below) has been added for copyright protection is also referred to herein as content. It will be further noted that "data" when used alone means multimedia data to which content ID has not been added.

The content producer is typically the copyright holder. The content could be only video or only audio. In order to distribute content, the copyright holder sends the content from the copyright holder terminal 20 to the content server 3. The copyright holder terminal 20 is a computer terminal whereby the copyright holder transmits data. The copyright holder terminal 20 and content server 3 could be the same computer.

The content server 3 has a content identification data generating unit 31 and a content identification data appending unit 32 (hereinafter referred to as "content ID generating unit 31" and "content ID appending unit 32", respectively). The content ID generating unit 31 generates the content ID according to a specified process. The content ID is uniquely and uniformly assigned in order to identify the content.

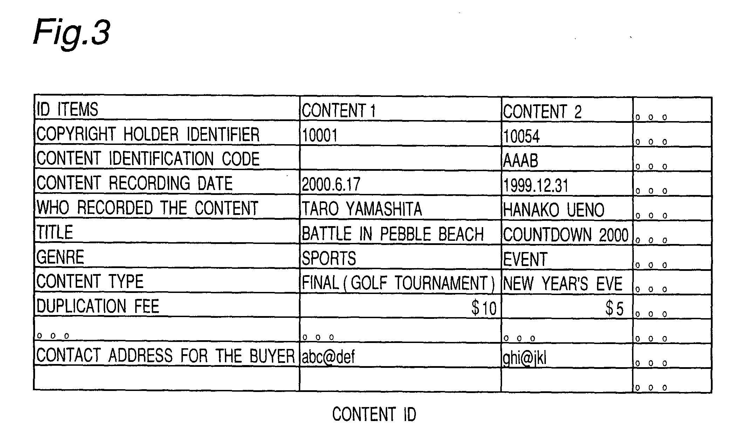

Fig. 3 shows an example of the content ID. As shown in Fig. 3, the content ID preferably contains the following information in a specified format: a copyright holder identifier, content identification code, content recording date, who recorded the content, title, genre, content type, duplication fee, and a contact address for the buyer.

The copyright holder identifier is uniformly and uniquely assigned to each copyright holder, and enables the owner of the copyright to the content to be identified. The copyright holder identifier is transmitted with the content from the copyright holder terminal 20 sending the content, or the sender is identified by the content server 3.

The content identification code is a unique value, and is added when the content is commercial content produced by a production company or other content creation company for resale purposes. The content identification code of content 2 in Fig. 3 is AAAB. The content ID generating unit 31 (Fig. 2) generates the content identification code using not only the content creation date, but also the hour, minute, second, and even millisecond data as parameters. If it is desirable to uniquely identify content 2 worldwide, the producer can apply to an organization for assigning identification codes that are common worldwide and ask for the unique content identification code AAAB for use with the particular content. As will be further described below, this content identification code and copyright holder identifier can be used to determine if content is an illegal copy.

The name of the recorder, title, and other information is input by the producer.

Returning again to Fig. 2, the content ID appending unit 32 embeds the content ID generated by the content ID generating unit 31 as a digital watermark in the content received from the copyright holder terminal 20.

A digital watermark is characterized primarily in that the digital watermark is not lost when the copyrighted material (audio or video) is edited or compressed or expanded; is embedded at a level that is not detectable to the human eye or ear; and the original quality of the copyrighted material is maintained even when a digital watermark is embedded. The content ID is thus integral to and inseparable from the content, overwriting the content ID can be prevented, and the content ID can be used to control playback and recording of the content.

Various methods can be used to embed a digital watermark. One method is to randomly add the digital watermark data to a specific frequency component of the content. More specifically, the signal containing embedded digital watermark data is

$$a_i + x_i * c_i \qquad (1)$$

where $a_i$ is the specific frequency component of the content where the digital watermark is inserted, $c_i$ is a random value of +1 or -1, and $x_i$ is the value of the content ID that is embedded as the digital watermark.

This results in content having the content ID superimposed as a digital watermark on the content. It will also be obvious that when the content ID is superimposed as digital watermark data to the content from the copyright holder terminal 20, the content ID can be encrypted before being superimposed. In this case the value of $x_i$ in equation 1 is the value of the encrypted content ID. Either the content ID generating unit 31 or the content ID appending unit 32 can process the encryption. Using encrypted content ID as the digital watermark data also makes unauthorized decryption of the information by a user more difficult and thus more reliably protects the copyright.

The content server 3 then generates and sends catalog data for the content to the relay server 2 in order to market the content to a wider audience. The catalog data could contain previews of content highlights, a copyright notice, the title, content type, price, and where to contact to purchase the content.

Referring again to Fig. 2, the relay server 2 is a server computer accessible from the network and storing a compiled catalog of plural catalog data entries. If the content contains video, the relay server 2 preferably enables the content highlights to be previewed. If the content is audio (music), a selection of a particular length could be provided as a preview. The copyright notice and warning about illegal act of copying is likewise displayed.

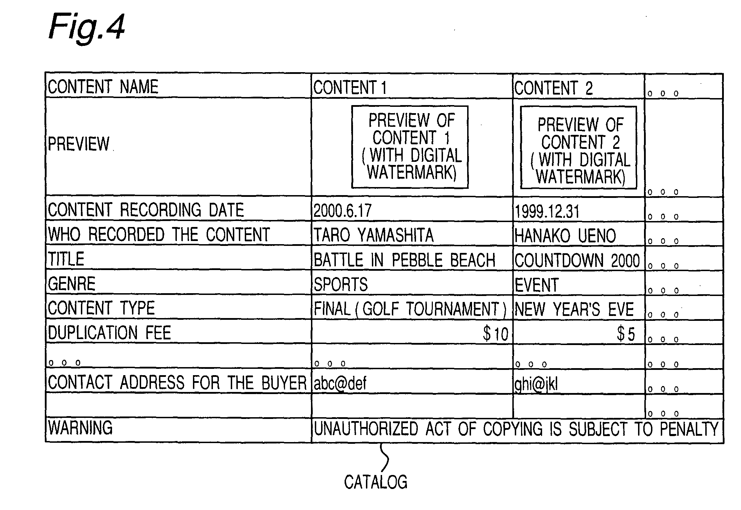

A sample catalog compiling plural catalog data entries is shown in Fig. 4. The catalog can be posted to a common bulletin board (electronic bulletin board) accessible from the network. Users can then select desired content by accessing the bulletin board on the relay server 2 and viewing the catalog. It should be further noted that the content ID is also contained in the preview data extracted from the content.

The configuration of the relay server 2 is described next. As shown in Fig. 2, the relay server 2 has an identification data extraction unit 21 (hereinafter referred to as "ID extraction unit 21"), identification data table 22 (hereinafter referred to as "ID table 22"), verification unit 23, catalog data storage unit 24, bulletin board 25, identification data separation unit 26 (hereinafter referred to as "ID separation unit 26"), format converter 27, and identification data appending unit 28 (hereinafter referred to as "ID appending unit 28").

The ID extraction unit 21 extracts the identification data added to the content from the preview part used in the catalog data. The identification data referred to here is the copyright holder identifier ([10001], [10054] in Fig. 4) and the content identification code (AAAB in Fig. 4), that is, the digital watermark data added randomly to the specific frequency component.

The specific method of extracting the identification data is described below. That is, the content is first passed through the same bandpass filter used to insert the digital watermark to extract the frequency component where the identification data is embedded. The same random number used for digital watermark insertion is multiplied with the frequency component, and the result is passed through a filter for extracting only the DC component. As described above with reference to equation 1, the signal containing embedded digital watermark data can be written as [$a_i + x_i * c_i$] where $a_i$ is the specific frequency component of the content where the digital watermark is inserted, $c_i$ is a random value of +1 or -1, and $x_i$ is the value of the content ID that is embedded as the digital watermark. The value after the ID extraction unit 21 is multiplied by random number $c_i$ is therefore

$$(a_i + x_i * c_i) * c_i = a_i * c_i + x_i * (c_i{}^2) \qquad (2)$$

When public key encryption is used random number $c_i$ is encrypted using the public key and sent only to the relay server 2 and the user terminal of the authorized user. The relay server 2, for example, then decrypts random $c_i$ using a unique secret (private) key. More specifically, random number $c_i$ is +1 or -1, so the DC component of $a_i * c_i$ is 0 and $c_i{}^2 = 1$. Filtering this signal with the dc component extraction filter results in $(a_i + x_i * c_i) * c_i = x_i$, and the identification data embedded as the digital watermark can be extracted.

If the content ID used as the digital watermark was first encrypted, a key is needed for decryption. This key can be obtained from the content server 3. The ID extraction unit 21 uses this key to decode the content ID. If public key encryption is used, the public key used for encryption and the private key used for decryption are both required.

The identification data can alternatively be encrypted as $(x_i + c_i)$ where $c_i$ is randomly +1 or -1 and $x_i$ is the value of the content ID used as the digital watermark and (+) indicates an exclusive OR. By adding $c_i$ to $x_i + c_i$, the result is

$$(x_i + c_i) + c_i = x_i + (c_i + c_i) = x_i + 0 = x_i \qquad (3)$$

and the ID extraction unit 21 can extract the identification data. As noted above, the random number $c_i$ is sent only to the relay server 2 and user terminal of an authorized user using public key encryption.

It will also be noted that encryption and decryption using the copyright holder identifier can also be accomplished by multiplying the copyright holder identifier and a random number or other method.

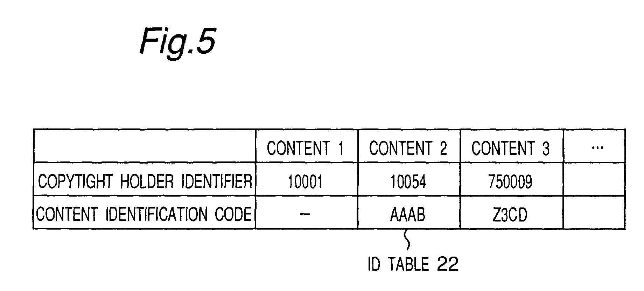

The ID table 22 stores the copyright holder identifier and content identification code as a set. Fig. 5 shows an example of the ID table 22. The information stored to the ID table 22 is the content identification code and copyright holder identifier information used in the catalog data that is sent from the content server 3 before the catalog data is sent to the relay server 2.

The verification unit 23 shown in Fig. 2 verifies if the combination of copyright holder identifier and content identification code extracted by the ID extraction unit 21 is correct. More specifically, the verification unit 23 compares the copyright holder identifier and content identification code combination extracted by the ID extraction unit 21 with the copyright holder identifier and content identification code combinations stored in the ID table 22, and if a match is found knows that the content is not an illegal copy. This means that the verification unit 23 determines whether the catalog data and further the content sent from the content server 3 is information that was sent by the copyright holder. If the combination is confirmed to be legal, the verification unit 23 allows the catalog data storage unit 24 to store the catalog data. The catalog data storage unit 24 then stores the catalog data sent from the content server 3. Distribution of the content is thus allowed, and the content catalog is posted to the bulletin board 25. The catalog shown in Fig. 4 contains content 1 and content 2.

The verification unit 23 detects an illegal copy if the combination of copyright holder identifier and content identification code extracted by the ID extraction unit 21 does not match a combination stored in the ID table 22, or if the content ID is not detected, and the catalog data is therefore not posted to the bulletin board 25. This is because there is a high probability that it is an illegal copy of existing commercial content. In this case the user requesting that the content be posted (the user terminal of the general user that made the illegal copy, for example) is notified that the content will not be posted. This results in illegally copied content not being posted to the bulletin board 25. To forcefully protect against illegal copying, the legal holder of the content copyright could also be notified that there was an attempt to load an illegal copy of the copyrighted content. It will be noted that by polling the organization assigning common identification codes worldwide to confirm whether a copyright holder identifier and content identification code combination is correct, the verification unit 23 can determine the authenticity (legality) of the identification data.

The user terminal 1 is described next. The user terminal 1 is the terminal or computer whereby a user views the bulletin board 25 containing the catalog data, views previews of content from the catalog data on the bulletin board 25, and views or listens to the content. If there is content that the user wishes to purchase, the user sends a purchase request to the content provider (marketer or copyright holder of the content on the content server 3). This request contains the e-mail address or other information specifying the content provider or other party marketing the content. When the content server 3 receives such a purchase request, it sends a request for credit card information, electronic money, or other payment method to the user terminal 1. The content server 3 also requests the format supported by the user terminal 1 for viewing the content.

When the credit card information and format supported by the user terminal 1 is received, the content server 3 verifies the credit card information, electronic money, or other payment information, and then sends the content desired by the user to the relay server 2. If the format of the content received from the content server 3 is the same as format specified by the user, the relay server 2 simply sends the content directly to the user terminal 1.

If the format of the content sent to the relay server 2 differs from the format required by the user terminal 1, the relay server 2 converts the received format to the format viewable by the user terminal 1, and then transmits the content to the user terminal 1. The term " viewable" means that the user terminal 1 supports the format in which the content will be reproduced, or can display the content at the performance of the output display (the display performance of the monitor) of the user terminal 1. This process is run primarily by the ID separation unit 26, format converter 27, and ID appending unit 28.

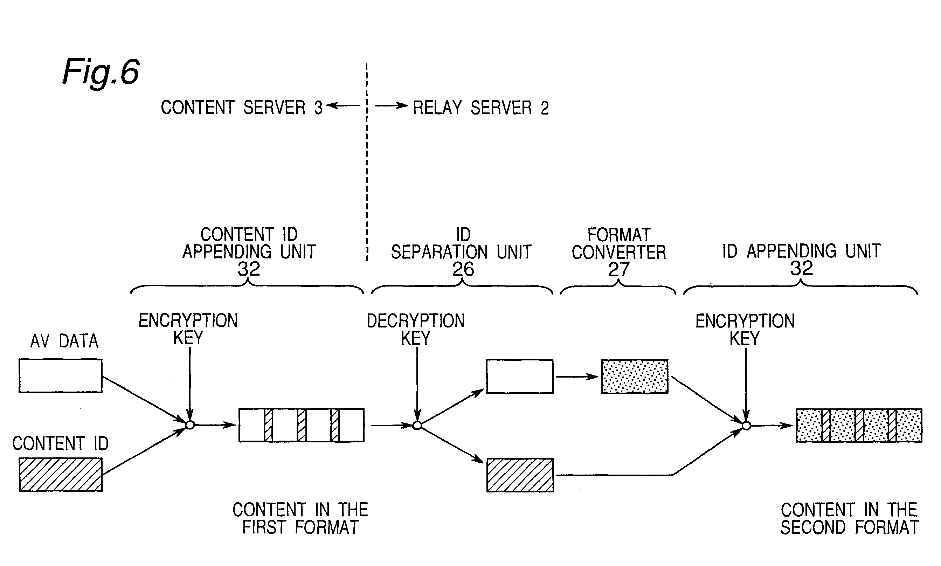

The primary steps of the process of this invention for format conversion are described next with reference to Fig. 6. While the format specification includes the encoding method, resolution, and other parameters, a process for converting content in MPEG-2 main profile, high level format (such as HDTV format) to content in MPEG-4 simple profile, level 0 format (such as Quarter Common Intermediate Format (QCIF)) is used by way of example. This conversion process enables the user to view content using a cellular phone or other user terminal 1 on which content cannot be viewed in the normal TV format.

Fig. 6 shows the concept of this format conversion process, which is described in sequence below. The copyright holder produces MPEG-2 main profile, high level AV data conforming to the HDTV format, and sends this data to the content server 3. The content ID appending unit 32 of the content server 3 generates content in first format by adding content ID as a digital watermark encrypted using a public key encryption scheme to the AV data. The content server 3 sends content in this first format to the relay server 2.

Using the private decryption key, the ID separation unit 26 of the relay server 2 separates the content ID from the content, and thus extracts the content and the content ID. More specifically, it separates the content ID from the content formatted to this first format specification. The AV data is then obtained by subtracting the content ID from the first format data.

It should be noted that the process described below can continue by simply extracting the content ID from the content without completely separating the content ID and AV data. In this case, however, plural different digital watermarks will be added to the content, and content quality will likely deteriorate.

The format converter 27 then downsamples the MPEG-2 main profile, high level format AV data obtained by the ID separation unit 26 to MPEG-4 simple profile, level 0 format AV data. Using the procedure described above for adding a digital watermark, the ID appending unit 28 of the relay server 2 then adds the extracted content ID to the converted AV data to output data formatted to the second format specification. The ID appending unit 28 sends the reformatted content to the user terminal 1 (Fig. 1).

It will be noted that the extracted content ID is re-inserted to the reformatted content as the digital watermark without modification in the above example. It will be obvious, however, that the format converter 27 could delete or modify part of the content ID before inserting it as the digital watermark to the AV data. For example, the original content ID could contain information indicating that the content is formatted to the first format specification, and the format converter 27 could modify the content ID inserted to the AV data to indicate that content has been reformatted to the second format specification. In this case it will still be possible to determine that content was illegally obtained even if a third party reformats the content because the digital watermark cannot be changed by a third party and the content ID (digital watermark) will still contain information indicating the first format specification even though the content has been reformatted to the second specification.

It will also be obvious that different methods and encryption keys can be used to add or insert the digital watermark data.

It will also be obvious that while conversion from an MPEG-2 main profile, high level format to the MPEG-4 simple profile, level 0 format is described above, the invention shall not be so limited as other conversions will also be possible. Irrespective of whether the content is moving picture data or still image data, conversion from one format to another format such as shown in the following Table 1 is possible.

Table 1

| Content Type | Format | Application, features |
|---|---|---|
| Video | MPEG-2 video, main profile, high level | HDTV High Resolution |
| | MPEG-2 video, main profile, main level | Standard TV Medium Resolution |
| | MPEG-1 video | PC, karaoke |
| | MPEG-4 video, simple profile, level 0 | Cellular phone display |
| | MPEG-4 video, core profile, level 2 | PC, Internet |
| | ITU-T H.26L | Telephone |
| | ITU-T H.263 | Wire telephony |
| | ITU-T H.261 | Wire telephony |
| | Windows Media Video | PC, Internet |
| | Real Video | PC, Internet |
| | Motion JPEG | Cameras |
| | Motion JPEG 2000 | Cameras (future) |
| Still Image | JPEG | Cameras |
| | JPEG 2000 | Cameras (future) |
| | GIF | PC |

Format conversion is possible, for example:

* between different moving picture (video) formats (such as from a MPEG-2 video, main profile, high level format to a MPEG-2 video, main profile, main level format);
* between different still image formats (such as from JPEG to GIF);
* from a video format to a still image format (such as from a MPEG-2 video, main profile, high level format to the JPEG 2000 format); and
* from a still image format to a video format (such as from still images in plural JPEG formats to a motion JPEG format, or converting plural GIF format still images to a frame interpolated MPEG-1 video format). It will be noted that the formats shown in the above table are known from the literature, and description of specific conversion algorithms is therefore omitted.

As described above, the relay server 2 can generate content containing a digital watermark and in a format that is viewable on the user terminal 1. The content can then be sent to the user terminal 1 so that the user can enjoy viewing the content while simultaneously appropriately protecting the copyright of the content owner.

The configuration of the user terminal 1 is described next. The user terminal 1 could be a personal computer, cellular phone, or television or video deck having a communication function. The user terminal 1 has an identification data extraction unit 11 (hereinafter referred to as "ID extraction unit 11"), verification unit 12, recorder 13, and playback unit 14.

When receiving content in the second format from the relay server 2 begins, the ID extraction unit 11 of the user terminal 1 reads the content ID embedded in the content. It will be noted that only part of the content is received at this time. Based on the read identification data, the verification unit 12 then confirms the authenticity of the content using the same method used by the verification unit 23 of the relay server 2. If the content is verified, the verification unit 12 permits recording the content to the recorder 13.

If content verification fails because the received content is not an authorized copy, for example, or the content ID is not detected, receiving the content is stopped. It will also be obvious that the verification unit 12 could verify the content after reception is completed. If verification fails in this case, the verification unit 12 prevents the playback unit 14 from reproducing and outputting the content, and thus prevents the viewer from seeing the content output on the display. This means that even if a user completely downloads an illegal copy to the user's terminal, the content will not be presented. The copyright is therefore protected.

As will be known from the preceding description of the present invention, the relay server 2 converts the format specification of the content from a first format to a second format if the format (first format specification) of the content stored on the content server 3 is not the same as the format (second format specification) required for viewing on the user terminal 1. This assures that the user of the user terminal 1 can enjoy the content. In addition, the content ID inserted as a digital watermark to the content of the first format is not lost and is also contained in the content after conversion to the second format. The content ID contains a copyright holder identifier enabling the content owner to be identified, and a content identification code identifying the content. Whether content is an illegal copy can be determined based on the content ID, and the copyright of the content owner can therefore be simultaneously protected.

In the preferred embodiment of the invention described above the content ID appending unit 32 of the content server 3 inserts the content ID to the AV data sent from the copyright holder. This operation can, however, be performed by the relay server 2. In this case the content server 3 sends the content and the content ID to the relay server 2. The relay server 2 could also fetch or generate the content ID.

The format converter 27 of the relay server 2 also converts content from a first format specification to a second format specification, but a conversion program could be contained in the user terminal 1 for conversion to the desired format specification.

Purchase requests are also sent directly from the user terminal 1 to the content server 3 in the above embodiment, but could also be sent through the relay server 2 to the content server 3. In this case the content server 3 only processes requests received from the relay server 2, thus simplifying management.

The processing operations of the various components of the above described content distribution system can also be written as a computer program causing a computer to execute the various processes. Such a computer can be recorded to a CD, DVD, or other optical disc, to a floppy disk or other magnetic storage medium, or to flash memory or other semiconductor storage medium. The computer program could yet further be distributed as an electric signal via the Internet or other network.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

**1.** A method for controlling content distribution over a network, the method comprising:

generating content in a first format specification by adding content identification data for identifying specific content to data produced in a first format specification for viewing;
sending the content to a network;
receiving the content via the network;
separating the received content into the content identification data and the data in the first format specification;
converting the separated data in the first format specification to data in a second format specification that is different from the first format specification;
generating content in a second format specification by adding the separated content identification data to the data converted to the second format specification; and
sending the content in the second format specification to a user terminal.

**2.** A method for controlling content distribution as described in claim 1, wherein:

the content identification data contains information indicating the content format; and
the converting comprises converting the information indicating the content format according to the conversion of data from the first format specification to the second format specification.

**3.** A method for controlling content distribution as described in claim 1, wherein the separating comprising:

obtaining the content identification data from the content; and
obtaining the data in the first format specification by subtracting the obtained content identification data from the content.

**4.** A method for controlling content distribution as described in claim 1, further comprising in the user terminal:

extracting the content identification data from content in the second format specification; and
reproducing the content in the second format specification if the content identification data is correctly extracted.

**5.** A system for controlling content distribution over a network, the system comprising:

a first identification data adding unit for generating content in a first format specification by adding content identification data for identifying specific content to data produced in a first format specification for viewing, and then sending the content to a network;
an identification data separating unit for receiving the content from the first identification data adding unit via the network, and separating the received content into the content identification data and the data in the first format specification;
a converter for converting data in the first format specification separated by the identification data separating unit to data in a second format specification that is different from the first format specification; and
a second identification data adding unit for generating content in a second format specification by adding the content identification data separated by the identification data separating unit to the data to the data converted to the second format specification by the converter, and then sending the content in the second format specification to a user terminal.

**6.** A system for controlling content distribution as described in claim 5, wherein:

the content identification data contains information indicating the content format; and
the converter also converts the information indicating the content format according to the conversion of data from the first format specification to the second format specification.

**7.** A system for controlling content distribution as described in claim 5, wherein:

the identification data separating unit obtains the content identification data from the content, and separates the content identification data and the data to be viewed by subtracting the obtained content identification data from the content.

**8.** A system for controlling content distribution as described in claim 5, wherein:

a content server having the first identification data adding unit and receiving data to be viewed produced in a first format specification from a data creator terminal,
a relay server having the identification data separating unit, converter, and second identification data adding unit, and
a user terminal for receiving content in the second format specification from the second identification data adding unit of the relay server, are connected to the network.

**9.** A system for controlling content distribution as described in claim 5, wherein:

the user terminal extracts the content identification data from content in the second format specification, and reproduces the content in the second format specification if the content identification data is correctly extracted.

**10.** A computer-executable program for controlling content distribution, the program comprising:

generating content in a first format specification by adding content identification data for identifying specific content to data produced in a first format specification for viewing;
sending the content to a network;
receiving the content via the network;
separating the received content into the content identification data and the data in the first format specification;
converting the separated data in the first format specification to data in a second format specification that is different from the first format specification;
generating content in a second format specification by adding the separated content identification data to the data converted to the second format specification; and
sending the content in the second format specification to a user terminal.

**11.** A computer-executable program for controlling content distribution as described in claim 10, wherein:

the content identification data contains information indicating the content format; and
the converting comprising converting the information indicating the content format according to the conversion of data from the first format specification to the second format specification.

**12.** A computer-executable program for controlling content distribution as described in claim 10, wherein the separating comprises:

obtaining the content identification data from the content; and
obtaining the data in the first format specification by subtracting the obtained content identification data from the content.

**13.** A computer-executable program for controlling content distribution as described in claim 10, further comprising in the user terminal:

extracting the content identification data from content in the second format specification; and
reproducing the content in the second format specification if the content identification data is correctly extracted.

**14.** A recording medium for recording a computer-executable program for controlling content distribution as described in claim 10.

**15.** A method for relaying content distributed over a network, the method comprising:

receiving content via the network, where the content is generated in a first format specification by adding content identification data for identifying specific content to data produced in a first format specification for viewing;
separating the received content into the content identification data and the data in the first format specification;
converting the separated data in the first format specification to data in a second format specification that is different from the first format specification;
generating content in a second format specification by adding the separated content identification data to the data converted to the second format specification; and
sending the content in the second format specification to a user terminal.

**16.** A method for relaying content distributed as described in claim 15, wherein the content identification data contains information indicating the content format and the converting includes converting the content identification data according to the conversion of data from the first format specification to the second format specification.

*Fig.1*

COMMUNICATION
NETWORK 4

CONTENT
SERVER

3

RELAY
SERVER

2

USER
TERMINAL

1

10

EP 1 187 048 A2

*Fig.2*

**1 USER TERMINAL**
- PLAYBACK UNIT — 14
- RECORDER — 13
- VERIFICATION UNIT — 12
- ID EXTRACTION UNIT — 11

10

**RELAY SERVER 2**
- ID TABLE — 22
- VERIFICATION UNIT — 23
- ID EXTRACTION UNIT — 21
- CATALOG DATA STORAGE UNIT — 24
- BULLETIN UNIT — 25
- ID SEPARATION UNIT — 26
- FORMAT CONVERTER — 27
- ID APPENDING UNIT — 28

**CONTENT SERVER 3**
- CONTENT ID GENERATING UNIT — 31
- CONTENT ID APPENDING UNIT — 32
- AUDIO/VIDEO DATA

CATALOG DATA

CONTENT IN THE FIRST FORMAT

CONTENT IN THE SECOND FORMAT

PURCHASE REQUEST

20 COPYRIGHT HOLDER TERMINAL

12

# Fig.3

| ID ITEMS | CONTENT 1 | CONTENT 2 | o o o |
|---|---|---|---|
| COPYRIGHT HOLDER IDENTIFIER | 10001 | 10054 | o o o |
| CONTENT IDENTIFICATION CODE | | AAAB | o o o |
| CONTENT RECORDING DATE | 2000.6.17 | 1999.12.31 | o o o |
| WHO RECORDED THE CONTENT | TARO YAMASHITA | HANAKO UENO | o o o |
| TITLE | BATTLE IN PEBBLE BEACH | COUNTDOWN 2000 | o o o |
| GENRE | SPORTS | EVENT | o o o |
| CONTENT TYPE | FINAL ( GOLF TOURNAMENT ) | NEW YEAR'S EVE | o o o |
| DUPLICATION FEE | $10 | $5 | o o o |
| o o o | o o o | o o o | o o o |
| CONTACT ADDRESS FOR THE BUYER | abc@def | ghi@jkl | o o o |
| | | | o o o |

CONTENT ID

EP 1 187 048 A2

# Fig.4

| CONTENT NAME | CONTENT 1 | CONTENT 2 | o o o |
|---|---|---|---|
| PREVIEW | PREVIEW OF CONTENT 1 ( WITH DIGITAL WATERMARK) | PREVIEW OF CONTENT 2 ( WITH DIGITAL WATERMARK) | o o o |
| CONTENT RECORDING DATE | 2000.6.17 | 1999.12.31 | o o o |
| WHO RECORDED THE CONTENT | TARO YAMASHITA | HANAKO UENO | o o o |
| TITLE | BATTLE IN PEBBLE BEACH | COUNTDOWN 2000 | o o o |
| GENRE | SPORTS | EVENT | o o o |
| CONTENT TYPE | FINAL ( GOLF TOURNAMENT ) | NEW YEAR'S EVE | o o o |
| DUPLICATION FEE | $10 | $5 | o o o |
| o o o | o o o | o o o | o o o |
| CONTACT ADDRESS FOR THE BUYER | abc@def | ghi@jkl | o o o |
| | | | o o o |
| WARNING | UNAUTHORIZED ACT OF COPYING IS SUBJECT TO PENALTY | | |

CATALOG

*Fig.5*

| | CONTENT 1 | CONTENT 2 | CONTENT 3 | ... |
|---|---|---|---|---|
| COPYTIGHT HOLDER IDENTIFIER | 10001 | 10054 | 750009 | |
| CONTENT IDENTIFICATION CODE | — | AAAB | Z3CD | |

ID TABLE 22

**Fig.6**

CONTENT SERVER 3 ← | → RELAY SERVER 2

CONTENT ID APPENDING UNIT 32

ID SEPARATION UNIT 26

FORMAT CONVERTER 27

ID APPENDING UNIT 32

AV DATA

CONTENT ID

ENCRYPTION KEY

DECRYPTION KEY

ENCRYPTION KEY

CONTENT IN THE FIRST FORMAT

CONTENT IN THE SECOND FORMAT

EP 1 187 048 A2

## Fig.7  PRIOR  ART

CONTENT-OWNER TERMINAL 103

104

USER TERMINAL 101

USER TERMINAL 102

100